(19) Europäisches Patentamt / European Patent Office / Office européen des brevets

(11) **EP 3 909 661 A1**

(12) **EUROPEAN PATENT APPLICATION**
published in accordance with Art. 153(4) EPC

(43) Date of publication:
**17.11.2021 Bulletin 2021/46**

(51) Int Cl.:
**B01D 21/01** *(2006.01)*   **C01F 7/52** *(2006.01)*

(21) Application number: **19909023.4**

(22) Date of filing: **19.12.2019**

(86) International application number:
**PCT/JP2019/049928**

(87) International publication number:
**WO 2020/145081 (16.07.2020 Gazette 2020/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.01.2019   CN 201910015146**

(71) Applicants:
• **DAIKIN INDUSTRIES, LTD.**
  **Osaka-shi, Osaka 530-8323 (JP)**
• **Daikin Fluorochemicals (China) Co., Ltd.**
  **Jiangsu 215522 (CN)**

(72) Inventors:
• **HATAYAMA, Ryo**
  **Osaka-shi, Osaka 530-8323 (JP)**
• **HU, Zhiyi**
  **Changshu, Jiangsu 215522 (CN)**
• **PAN, Hong**
  **Changshu, Jiangsu 215522 (CN)**
• **ZHANG, Linjun**
  **Changshu, Jiangsu 215522 (CN)**
• **ZHAO, Shihui**
  **Changshu, Jiangsu 215522 (CN)**
• **HUANG, Wei**
  **Changshu, Jiangsu 215522 (CN)**
• **CAI, Xiaobo**
  **Changshu, Jiangsu 215522 (CN)**

(74) Representative: **Hoffmann Eitle**
**Patent- und Rechtsanwälte PartmbB**
**Arabellastraße 30**
**81925 München (DE)**

(54) **CHEMICAL COMPRISING FLUORINE-CONTAINING POLYALUMINUM CHLORIDE**

(57)     A chemical agent comprising a fluorine-containing polyaluminum chloride, wherein the chemical agent has 4,500 to 100,000 ppm by mass of fluorine per part by mass of aluminum.

EP 3 909 661 A1

**Description**

Technical Field

The present disclosure relates to a chemical agent comprising a fluorine-containing polyaluminum chloride.

Background Art

Using coagulants comprising aluminum for the treatment of wastewater has been studied. For example, Patent Literature 1 describes a method for adding high aluminum fly ash to waste hydrochloric acid comprising fluorine and eluting aluminum in the high aluminum fly ash to prepare a fluorine-containing hydrochloric acid solution having a high aluminum content; adding calcium aluminate to the fluorine-containing hydrochloric acid solution having a high aluminum content and dissolving the mixture, and carrying out a polymerization reaction and solid-liquid separation to obtain a solution of polyaluminum chloride. Patent Literature 2 describes a method for adding calcium chloride and calcium aluminate to a fluorine-containing waste hydrochloric acid, and filtering the mixture for removing fluorine-containing solid waste to obtain a solution of polyaluminum chloride.

Citation List

Patent Literature

Patent Literature 1: Chinese Patent Application Publication No. CN106745139
Patent Literature 2: Chinese Patent Application Publication No. CN104649391

Summary of Invention

Technical Problem

However, Patent Literatures 1 and 2 do not study on in particular the utilization of the aluminum compound comprising fluorine or the chemical agent comprising the same.

Solution to Problem

The present disclosure provides following [1] to [14] :

[1] A chemical agent comprising a fluorine-containing polyaluminum chloride, wherein
the chemical agent has 4,500 to 100,000 ppm by mass of fluorine per part by mass of aluminum.
[2] The chemical agent according to [1], which is in powder form.
[3] The chemical agent according to [1] or [2], further comprising a solvent.
[4] The chemical agent according to [3], wherein the solvent comprises water.
[5] The chemical agent according to [3] or [4], which is in a form of a liquid material.
[6] The chemical agent according to any one of [1] to [5], which is a coagulant.
[7] A method for producing a fluorine-containing polyaluminum chloride, comprising

(a) reacting 100 parts by mass of an aqueous solution comprising 10 to 36 parts by mass of hydrogen chloride and 300 to 5,000 ppm by mass of fluorine, and an aluminum source compound to obtain a reaction mixture comprising the fluorine-containing polyaluminum chloride.

[8] The method for producing a fluorine-containing polyaluminum chloride according to [7], wherein (a) comprises reacting the aqueous solution comprising hydrogen chloride and fluorine, and the aluminum source compound at a pressure of 0 to 1.45 MPaG and a temperature of 100 to 200°C to obtain the reaction mixture comprising the fluorine-containing polyaluminum chloride.
[9] The method for producing a fluorine-containing polyaluminum chloride according to [7] or [8], wherein (a) comprises reacting the aqueous solution comprising hydrogen chloride and fluorine, and the aluminum source compound at a temperature of 70 to 99°C and then at a pressure of 0 to 1.45 MPaG and a temperature of 100 to 200°C to obtain the reaction mixture comprising the fluorine-containing polyaluminum chloride.

[10] The method for producing a fluorine-containing polyaluminum chloride according to any one of [7] to [9], wherein, in (a), 100 parts by mass of the aqueous solution is reacted with the aluminum source compound comprising 5 to 35 parts by mass of aluminum in terms of aluminum oxide ($Al_2O_3$).

[11] The method for producing a fluorine-containing polyaluminum chloride according to any one of [7] to [10], wherein the aluminum source compound is aluminum hydroxide.

[12] The method for producing a fluorine-containing polyaluminum chloride according to [11], wherein the aluminum hydroxide sifts through a 50-mesh sieve and does not sift through a 1,250-mesh sieve.

[13] The method for producing a fluorine-containing polyaluminum chloride according to any one of [7] to [12], further comprising drying the reaction mixture obtained in (a).

[14] The method for producing a fluorine-containing polyaluminum chloride according to any one of [7] to [13], further comprising adjusting basicity of the fluorine-containing polyaluminum chloride.

Advantageous Effects of Invention

According to the present disclosure, a chemical agent that can be used as a coagulant can be provided.

Description of Embodiments

The chemical agent of the present disclosure in one embodiment and the method for producing the same will be described below.

The chemical agent of the present disclosure comprises a fluorine-containing polyaluminum chloride.

In the present disclosure, a "chemical agent comprising a fluorine-containing polyaluminum chloride" refers to a substance comprising a fluorine-containing polyaluminum chloride as an active ingredient.

In the present disclosure, "fluorine-containing polyaluminum chloride" comprises fluorine in the molecule of polyaluminum chloride, and specifically, the fluorine is considered to be in a state of being bonded to a molecule constituting polyaluminum chloride.

The aforementioned chemical agent has 4,500 to 100,000 ppm by mass of fluorine per part by mass of aluminum. The chemical agent preferably comprises 4,500 ppm by mass or more of fluorine per part by mass of aluminum, more preferably 10,000 ppm by mass or more, and particularly preferably 13,000 ppm by mass or more; and it preferably comprises 100,000 ppm by mass or less, more preferably 80,000 ppm by mass or less, and still more preferably 70,000 ppm by mass or less. The chemical agent may comprise fluorine in the range of 10,000 to 80,000 ppm by mass or 13,000 to 70,000 ppm by mass per part by mass of aluminum. The fluorine includes a fluorine atom and/or a fluorine ion. By comprising fluorine as described above, the chemical agent of the present disclosure can efficiently remove a phosphorus-containing component comprised in a liquid to be treated, specifically, an aqueous solution.

The fluorine content in the chemical agent is measured as follows.

(1) 9 ml of 35% hydrochloric acid and 0.5 ml of trimethylchlorosilane (sometimes referred to as "TMCS") are mixed with 1 ml of the chemical agent, and the mixture is shaken and stirred for 1 minute.
It is considered that the above operation decomposes the bond between the fluorine bonded to the molecular chain of the compound comprised in the chemical agent and the molecular chain, and subsequently all of fluorine react with TMCS as follows to form $(CH_3)_3SiF$ (sometimes referred to as "TMFS").

$$2HF + (CH_3)_3SiCl \rightarrow (CH_3)_3SiF + HCl$$

(2) 2 ml of a toluene solution in which the internal standard substance, n-pentane, is added thereto is charged to the mixture obtained in (1) above, and the mixture is immersed and stirred for 1 minute.
TMFS is extracted into toluene by the above operation.
(3) The mixture obtained in (2) above is allowed to stand for 3 minutes. Then, 2 ml of a supernatant is collected and analyzed by gas chromatography under the conditions shown below.

As described above, it is considered that the bond between the fluorine bonded to the molecular chain and the molecular chain is decomposed by 35% hydrochloric acid, from which the fluorine measured in (3) above is both fluorine having been present as a fluorine ion in the chemical agent and fluorine having bonded to the molecular chain.

(Gas chromatography conditions)

Apparatus used: Gas chromatograph GC-2014 (manufactured by Shimadzu Corporation)
Column: Silicone OV-1 column
Column temperature: Holding at 50°C for 5 minutes → Heating up to 150°C at a temperature-increasing rate of 40°C/min → Holding at 150°C for 15 minutes.
Detection method: FID (Flame Ionization Detector)
Carrier gas: $N_2$, Flow rate: 50 mL/min
Injection port temperature: 100°C
Detector temperature: 180°C

In the above chemical agent, the compound represented by formula (1):

$$[Al_2(OH)_nCl_{6-n-k}F_k]_m \ldots \qquad (1)$$

is considered to be comprised as a fluorine-containing polyaluminum chloride.

In the above formula (1), n is 1 or more and less than 6, m is 10 or less, and k is in a range that can satisfy the fluorine content in the fluorine-containing polyaluminum chloride. k may be, for example, in the range of 0.01 to 0.27, or 0.04 to 0.17. 6-n-k is in the range of 0 to 6.

In the above formula (1), it is considered that a part of the aluminum ligands is in the state of being substituted with fluorine. In this case, the fluorine is considered to be a fluorine atom that is bonded to the aluminum atom of polyaluminum chloride. However, not all of fluorine may be comprised in the compound represented by the above formula (1) in the chemical agent of the present disclosure. For example, it may be present in the form of a fluorine ion.

In the chemical agent of the present disclosure, the concentration of fluorine ions may be, for example, 0 to 5,000 ppm by mass, 0 to 3,000 ppm by mass, 0 to 1,000 ppm by mass, or 5 to 100 ppm by mass. The fluorine ion concentration in the chemical agent can be measured by using the method described in Examples.

In the chemical agent of the present disclosure, the concentration of fluorine ions may be, for example, 0 to 100,000 ppm by mass, 0 to 80,000 ppm by mass, 0 to 20,000 ppm by mass, or 100 to 2,000 ppm by mass, per part by mass of aluminum.

Fluorine (for example, fluorine atom) bonded to the molecular chain of the fluorine-containing polyaluminum chloride may be comprised in an amount of 4,500 ppm by mass or more, it may be comprised in an amount of 10,000 ppm by mass or more, and it may be comprised in an amount of 13,000 ppm by mass or more; and it may be comprised in an amount of 100,000 ppm by mass or less, it may be comprised in an amount of 80,000 ppm by mass or less, or it may be comprised in an amount of 70,000 ppm by mass or less, per part by mass of the aluminum atom. In the aforementioned fluorine-containing polyaluminum chloride, fluorine (for example, fluorine atom) may be in the range of 4,500 to 100,000 ppm by mass, it may be in the range of 10,000 to 80,000 ppm by mass, or it may be in the range of 13,000 to 70,000 ppm by mass, per part by mass of the aluminum atom. By comprising the fluorine as described above, the chemical agent of the present disclosure can efficiently remove a phosphorus-containing component comprised in a liquid to be treated, specifically, an aqueous solution.

The concentration of fluorine bonded to the molecular chain of the aforementioned fluorine-containing polyaluminum chloride can be determined by the method described in Examples.

The aluminum concentration (in terms of $Al_2O_3$) in the aforementioned fluorine-containing polyaluminum chloride can be in the range of 30 to 70 parts by mass per 100 parts by mass of the fluorine-containing polyaluminum chloride. The aluminum concentration may be 30 parts by mass or more, and 40 parts by mass or more; and 70 parts by mass or less, and 65 parts by mass or less, per 100 parts by mass of the fluorine-containing polyaluminum chloride. The aluminum concentration may be in the range of 30 to 70 parts by mass or in the range of 40 to 65 parts by mass, per 100 parts by mass of the fluorine-containing polyaluminum chloride.

In the aforementioned fluorine-containing polyaluminum chloride, the basicity may be 30% or more or 50% or more; and 95% or less, or 85% or less. The basicity may be in the range of 30 to 95% or in the range of 40 to 85%.

The basicity represents the proportion (%) of the number of hydroxyl groups to the number of ligands bonded to the aluminum atom. The above basicity is a value represented by n/6 × 100(%), when a fluorine-containing polyaluminum chloride is represented by formula (1):

$$[Al_2(OH)_nCl_{6-n-k}F_k]_m \ldots \qquad (1)$$

The basicity of general polyaluminum chloride can be determined according to the Chinese national standard GB/T-22627.

The chemical agent of the present disclosure may further comprise a solvent.

The solvent is, for example, water.

In one embodiment, the content of the solvent may be greater than 0 parts by mass, and it may be 1 part by mass or more, or 5 parts by mass or more; and it may be 99 parts by mass or less, or 95 parts by mass or less, per 100 parts by mass of the chemical agent of the present disclosure. The content of the solvent may be in the range of greater than 0 parts by mass to 99 parts by mass or less, or 5 to 95 parts by mass, per 100 parts by mass of the chemical agent of the present disclosure.

In one embodiment, the chemical agent of the present disclosure does not comprise a solvent.

In one embodiment, the chemical agent of the present disclosure is in powder form. In such an embodiment, the chemical agent of the present disclosure may exhibit a solid appearance as a whole.

In the above embodiment, the chemical agent of the present disclosure can comprise aluminum in an amount of 20 parts by mass or more or 25 parts by mass or more; and in an amount of 40 parts by mass or less, per 100 parts by mass of the chemical agent. The chemical agent of the present disclosure can comprise aluminum in the range of 20 to 40 parts by mass or 25 to 40 parts by mass, per 100 parts by mass of the chemical agent. The aluminum content is a value in terms of $Al_2O_3$.

In the above embodiment, a solvent can be comprised in the chemical agent of the present disclosure in an amount of 0 parts by mass or more, or 5 parts by mass or more; and it may be comprised in an amount of 30 parts by mass or less, or 20 parts by mass or less, per 100 parts by mass of the chemical agent of the present disclosure. The solvent may be comprised in the range of 0 to 30 parts by mass or 5 to 20 parts by mass, per 100 parts by mass of the chemical agent of the present disclosure.

In one embodiment, the chemical agent of the present disclosure is in the form of a liquid material. In such an embodiment, the chemical agent of the present disclosure can exhibit a liquid appearance.

In the above embodiment, the chemical agent of the present disclosure can comprise aluminum in an amount of 5 parts by mass or more; and in an amount of 20 parts by mass or less or 15 parts by mass or less, per 100 parts by mass of the chemical agent (in terms of $Al_2O_3$). The chemical agent of the present disclosure can comprise aluminum in the range of 5 to 20 parts by mass or 5 to 15 parts by mass, per 100 parts by mass of the chemical agent (in terms of $Al_2O_3$).

In the above embodiment, a solvent can be comprised in the chemical agent of the present disclosure in an amount of 30 parts by mass or more, or in an amount of 40 parts by mass or more; and it can be comprised in an amount of 99 parts by mass or less, or in an amount of 95 parts by mass or less, per 100 parts by mass of the chemical agent of the present disclosure. The solvent may be comprised in the range of 30 to 99 parts by mass or 40 to 95 parts by mass, per 100 parts by mass of the chemical agent of the present disclosure.

The chemical agent of the present disclosure can further comprise, for example, an inorganic salt, an inorganic acid, a pH regulator, a basicity regulator, or a fluorinated telomere.

The basicity regulator includes calcium hydroxide, sodium hydroxide, potassium hydroxide, calcium aluminate, and sodium aluminate.

The basicity regulator can be used so that the concentration thereof is adjusted to the desired basicity. For example, when the basicity regulator is calcium hydroxide, the concentration of the basicity regulator can be 0 to 20%, and specifically it can be 0 to 10% by mass, by mass based on the chemical agent of the present disclosure (for example, a chemical agent in the form of a liquid material).

The inorganic salt includes, for example, sodium chloride, potassium chloride, and calcium chloride.

For example, when one of the inorganic salts is sodium chloride, the concentration thereof can be 0 to 25%, and specifically, it can be 0.3 to 10% by mass, by mass based on the chemical agent of the present disclosure (for example, a chemical agent in the form of a liquid material).

Inorganic acid includes, for example, hydrogen chloride, sulfuric acid, and nitric acid.

The pH regulator includes calcium hydroxide, sodium hydroxide, potassium hydroxide, calcium aluminate, and sodium aluminate.

The pH regulator can be used by adjusting the pH of the chemical agent to the desired pH. For example, when the chemical agent of the present disclosure is in the form of a liquid material, the pH regulator can be added such that the pH of the chemical agent is, for example, 2.0 or higher, or 3.5 or higher; and 6.0 or lower, or 5.0 or lower. The pH of the chemical agent may be in the range of, for example, 2.0 to 6.0, or 3.5 to 5.0. The aforementioned "pH of the chemical agent" refers to a numerical value generally used as a standard index of polyaluminum chloride. Specifically, the pH of the chemical agent is a numerical value obtained by diluting 10 g of the chemical agent in the form of a liquid material to 1 L. The pH of the chemical agent is a value measured according to the method described in GB/T-22627.

In the present description, the fluorinated telomer is a compound in which at least a part of hydrogen atoms of a hydrocarbon is substituted with a fluorine atom, and examples thereof can include, but are not limited to, a fluorine-containing compound having 5 to 30 carbon atoms. Examples of the fluorine-containing compound having 5 to 30 carbon atoms can include, but are not limited to, $H(CF_2)_{10}Cl$.

The aforementioned fluorinated telomer can be comprised in an amount of 10 to 1,000 ppm by mass based on the chemical agent of the present disclosure (for example, a chemical agent in the form of a liquid material).

In one embodiment, the chemical agent of the present disclosure may comprise a coagulant other than the fluorine-containing polyaluminum chloride. The coagulant other than the fluorine-containing polyaluminum chloride can further include, for example, a polymer coagulant or an inorganic coagulant other than the fluorine-containing polyaluminum chloride. The polymer coagulant is a coagulant having a large molecular mass, and examples of the polymer coagulant can include, but are not limited to, polyacrylamide. The inorganic coagulant includes aluminum sulfate, aluminum chloride, polyaluminum ferric chloride (PAFC), ferric chloride, polyferric sulfate, and ferric sulfate, and so on.

In one embodiment, the chemical agent of the present disclosure does not comprise a coagulant other than the fluorine-containing polyaluminum chloride. The coagulant other than the fluorine-containing polyaluminum chloride includes those listed above.

In one embodiment, the chemical agent of the present disclosure is substantially free from silicon oxide (for example, silicon dioxide). The term "substantially free from" refers to, for example, the concentration of silicon oxide in the chemical agent of 0.05% by mass or less, specifically 0.03% by mass or less.

A method suitable for producing a fluorine-containing polyaluminum chloride comprised in the chemical agent of the present disclosure will be described below. The method for producing a fluorine-containing polyaluminum chloride of the present disclosure is not limited to the following embodiments.

The method for producing a fluorine-containing polyaluminum chloride in the present embodiment comprises

(a) reacting 100 parts by mass of an aqueous solution comprising 10 to 36 parts by mass of hydrogen chloride, 300 to 5,000 ppm by mass of fluorine, and an aluminum source compound to obtain a reaction mixture comprising the fluorine-containing polyaluminum chloride.

The upper limit of the content of hydrogen chloride in 100 parts by mass of the aqueous solution is, for example, 36 parts by mass or 25 parts by mass, and the lower limit is, for example, 10 parts by mass or 15 parts by mass. The content of hydrogen chloride in the aqueous solution may be in the range of 10 to 36 parts by mass, or in the range of 15 to 25 parts by mass.

The content of fluorine comprised in the aqueous solution is preferably 300 ppm by mass or more, more preferably 1,000 ppm by mass or more, and preferably 5,000 ppm by mass or less and more preferably 3,000 ppm by mass or less. The fluorine content in the aqueous solution may be in the range of 300 to 5,000 ppm by mass, or in the range of 1,000 to 3,000 ppm by mass. The "fluorine" typically refers to a fluorine ion. If the fluorine content in the aqueous solution in (a) above is too small, the fluorine content in the fluorine-containing polyaluminum chloride obtained in (a) may not be in an appropriate numerical range. In such a case, the efficiency of removing the phosphorus-containing component by the chemical agent comprising a fluorine-containing polyaluminum chloride does not become satisfactory. If the fluorine content in the aqueous solution in (a) above is too large, it may cause corrosion of the apparatus. The concentration of fluorine comprised in the aqueous solution can be measured by a fluorine ion meter.

The aqueous solution can further comprise a fluorinated telomer. The fluorinated telomer has the same meaning as above.

The fluorinated telomer may be comprised, for example, in an amount of 10 to 1,000 ppm by mass based on the aqueous solution.

The aluminum source compound in (a) above includes compounds comprising aluminum, for example, aluminum hydroxide, calcium aluminate, sodium aluminate, aluminum oxide, Gao ling tu (kaolinite) and Lu fan tu (bauxite), and aluminum. The aluminum source compound is more preferably aluminum hydroxide.

In a preferred embodiment, the aluminum source compound in (a) above is aluminum hydroxide. By using aluminum hydroxide as the aluminum source compound, it is possible to prevent the production of a precipitate derived from impurities comprised in the aluminum source compound.

The aluminum source compound, specifically aluminum hydroxide, is preferably in particulate form.

The aforementioned aluminum source compound, specifically, aluminum hydroxide that sifts preferably through a 50-mesh sieve and not through a 1,250-mesh sieve, is used. The aluminum source compound, specifically, aluminum hydroxide that sifts more preferably through a 50-mesh sieve, still more preferably through a 100-mesh sieve, and particularly preferably through a 400-mesh sieve, is used, and aluminum hydroxide that does not sift more preferably through a 1,250-mesh sieve, and still more preferably not through 1,000-mesh sieve, is used. The Chinese national standard sieve GB/T6003 is used as the sieve. By using the aforementioned aluminum source compound (specifically, aluminum hydroxide), the concentration of aluminum comprised in the chemical agent comprising a fluorine-containing polyaluminum chloride can be increased.

In one embodiment, the aluminum source compound, (specifically aluminum hydroxide) is, for example, particulate that sifts through a 50-mesh sieve and not through a 1,250-mesh sieve, or that sifts through a 100-mesh sieve and not through a 1,000-mesh sieve.

In one embodiment, the aluminum source compound, specifically, aluminum hydroxide that has preferably a particle size in the range of 10 to 300 $\mu$m, more preferably a particle size of 10 $\mu$m or more, still more preferably a particle size of 13 $\mu$m or more, and more preferably a particle size of 300 $\mu$m or less, and still more preferably a particle size of

150 μm or less, is used. The particle size is a value obtained from the sieve opening size of the Chinese national standard sieve GB/T6003.

In (a) above, the aluminum source compound can be used in an amount that can provide sufficient aluminum to react with hydrogen chloride or fluorine comprised in an aqueous solution comprising hydrogen chloride and fluorine. For example, in (a), 100 parts by mass of an aqueous solution comprising hydrogen chloride and fluorine, and an aluminum source compound comprising 5 to 35 parts by mass of aluminum in terms of aluminum oxide ($Al_2O_3$), are preferably used.

The above (a) preferably comprises reacting the aqueous solution comprising hydrogen chloride and fluorine, and an aluminum source compound at a pressure of 0 to 1.45 MPaG (MPaG indicates a gauge pressure) and a temperature of 100 to 200°C to obtain a reaction mixture comprising the fluorine-containing polyaluminum chloride. The gauge pressure (MPaG) is a relative pressure to the atmospheric pressure that is set to zero, and the absolute pressure (MPaA) can be obtained by adding the atmospheric pressure to the gauge pressure.

The lower limit of the pressure is, for example, 0 MPaG or 0.26 MPaG, and the upper limit is, for example, 1.45 MPaG or 0.69 MPaG. The pressure may be, for example, in the range of 0 to 1.45 MPaG or 0.26 to 0.69 MPaG.

The lower limit of the temperature is, for example, 100°C or 140°C, and the upper limit is, for example, 200°C or 170°C. The temperature may be in the range of, for example, 100 to 200°C, or 140 to 170°C.

By reacting under the pressure and temperature conditions as described above, aluminum can be sufficiently dissolved in an aqueous solution comprising hydrogen chloride and fluorine, and an appropriate amount of fluorine atoms can be introduced into polyaluminum chloride. Further, after the formation of the fluorine-containing polyaluminum chloride, the content of fluorine ions remaining in the solution can be reduced.

The reaction in (a) above is preferably carried out at a pressure of 0 to 1.45 MPaG and a temperature of 100 to 200°C, and more preferably carried out at a pressure of 0.26 to 0.69 MPaG and a temperature of 140 to 170°C.

The reaction time in (a) above is not limited, and may be, for example, 1 to 12 hours or 3 to 10 hours.

The above (a) can be carried out by using a reaction vessel that can be normally used. The reaction vessel includes, for example, a glass coating vessel, a rubber lining vessel, a graphite vessel, a resin lining vessel, a resin coating vessel, a stainless steel vessel, a carbon steel vessel, a corrosion-resistant metal vessel such as Hastelloy, and an FRP (fiber reinforced plastic) vessel.

The above (a) may be reacted in one stage or in two or more stages. In the latter case, (a) above may be carried out by using two or more reaction vessels. When the reaction is carried out in two or more stages, the degree of freedom of selection of the reaction vessel material can be improved as compared with that of the reaction in one stage.

In one embodiment, reactions are carried out in two or more stages in (a) above.

In the above embodiment, (a) above preferably comprises reacting an aqueous solution comprising hydrogen chloride and fluorine, and an aluminum source compound are reacted at a temperature of 70 to 99°C (hereinafter, may be referred to as (a1)), and then at a pressure of 0 to 1.45 MPaG and a temperature of 100 to 200°C to obtain a reaction mixture comprising the fluorine-containing polyaluminum chloride (hereinafter, may be referred to as (a2)).

Although the present disclosure is not bound by any theory, for example, in (a1), the incorporation of fluorine in the aqueous solution into the molecular structure of polyaluminum chloride is considered to be particularly promotable.

The above (a1) can be carried out by using a reaction vessel that can be normally used. The reaction vessel includes, for example, a glass coating vessel, a rubber lining vessel, a graphite vessel, a resin lining vessel, a resin coating vessel, a stainless steel vessel, a carbon steel vessel, a corrosion-resistant metal vessel such as Hastelloy, and an FRP vessel. From the viewpoint of corrosion resistance, in the above (a1), the reaction vessels, such as a rubber lining vessel, a graphite vessel, a resin lining vessel, a resin coating vessel, a corrosion-resistant metal vessel such as Hastelloy, an FRP vessel, can be preferably used.

The contents of hydrogen chloride and fluorine comprised in the aqueous solution supplied to the above (a1) and the amount of the aluminum source compound are the same as those described for (a) above.

In the above (a1), the lower limit of the pressure is, for example, 0 MPaG, and the upper limit is, for example, 0.1 MPaG. In the above (a1), the pressure may be in the range of 0 to 0.1 MPaG, for example.

In the above (a1), the lower limit of the temperature is, for example, 70°C or 80°C, and the upper limit is, for example, 99°C. The temperature may be in the range of, for example, 70 to 99°C or 80 to 99°C.

By reacting under the above pressure and temperature conditions, the incorporation of fluorine in the aqueous solution into the molecular structure of polyaluminum chloride is particularly promoted, and corrosion of the reaction vessel can be reduced.

The above (a1) is preferably carried out at a pressure of 0 to 0.1 MPaG and a temperature of 70 to 99°C, and it is more preferably carried out at a pressure of 0 to 0.1 MPaG and a temperature of 80 to 99°C.

The reaction time of the above (a1) is not limited, and may be, for example, 1 to 10 hours or 1 to 6 hours.

In the above (a2), the lower limit of the pressure is, for example, 0 MPaG or 0.26 MPaG, and the upper limit is, for example, 1.45 MPaG or 0.69 MPaG. In the above (a2), the pressure may be in the range of, for example, 0 to 1.45 MPaG or 0.26 to 0.6 MPaG.

In the above (a2), the lower limit of the temperature is, for example, 100°C or 140°C, and the upper limit is, for example, 200°C or 170°C. In the above (a2), the temperature may be in the range of, for example, 100 to 200°C or 140 to 170°C.

By reacting under the above pressure and temperature conditions, aluminum can be sufficiently dissolved in an aqueous solution comprising hydrogen chloride and fluorine.

The above (a2) is preferably carried out at a pressure of 0 to 1.45 MPaG and a temperature of 100 to 200°C, and it is more preferably carried out at a pressure of 0.26 to 0.69 MPaG and a temperature of 140 to 170°C.

The reaction time of the above (a2) is not limited, and may be, for example, 1 to 12 hours or 3 to 10 hours.

The above (a2) can be carried out by using a reaction vessel that can be normally used. The reaction vessel includes, for example, a glass coating vessel, a rubber lining vessel, a graphite vessel, a resin lining vessel, a resin coating vessel, a stainless steel vessel, a carbon steel vessel, a corrosion-resistant metal vessel such as Hastelloy, and an FRP vessel. From the viewpoint of pressure resistance, the glass coating vessel, the graphite vessel, the resin lining vessel, the resin coating vessel, the stainless steel vessel, the carbon steel vessel, the corrosion-resistant metal vessel such as Hastelloy, etc., are preferably used.

By carrying out (a) above, the content of fluorine (specifically, fluorine ion) comprised in the aqueous solution can be reduced. In other words, fluorine can be incorporated into polyaluminum chloride.

The content of fluorine ions comprised in the aqueous solution after the reaction in (a) above is, for example, 5 ppm by mass or less, specifically 1 ppm by mass or less. The lower limit of the content of fluorine comprised in the aqueous solution comprising hydrogen chloride and fluorine supplied to (a) is, for example, 0 ppm by mass or 300 ppm by mass.

The method for producing a fluorine-containing polyaluminum chloride of the present embodiment may further comprise preliminarily increasing a temperature of the raw material used for the reaction. In this case, an apparatus (for example, a heater or a heating bath) used for the preliminary temperature increase may be separately provided.

Specifically, when reaction is carried out in one stage in (a) above, the method for producing a fluorine-containing polyaluminum chloride of the present disclosure can comprise, preliminarily increasing the temperature of aqueous solution comprising hydrogen chloride and fluorine, and/or the aluminum source compound, used in the reaction of (a).

When reactions are carried out in two stages in (a) above, the method for producing a fluorine-containing polyaluminum chloride of the present disclosure can comprise, preliminarily increasing the temperature of the aqueous solution comprising hydrogen chloride and fluorine, and/or the aluminum source compound, used in the reaction of (a1), and/or heating the reaction product obtained in (a1) to provide it to (a2).

By carrying out preliminary temperature increase, the temperature change in the reaction vessel can be mitigated, which enables to extend the life of the reaction vessel. By carrying out the preliminary temperature increase, it is possible to shorten the time required for the reaction in (a) or the reaction in (a1) or (a2).

The preliminary temperature increase may be carried out continuously or in a batch-type.

The method for producing a fluorine-containing polyaluminum chloride of the present embodiment may further comprise filtering the reaction mixture obtained in (a) above. For the filtration, a means that can be usually carried out can be used. By filtration, aluminum hydroxide that is the reaction residue in (a) above or a precipitate that is derived and producible from the aluminum source compound, etc., can be removed.

In one embodiment, the aluminum hydroxide that is the reaction residue in (a) above and/or the precipitate that is derived and producible from the aluminum source compound, can be reused as at least a part of the aluminum source compound supplied to the step (a). In this case, the proportions of the reused aluminum hydroxide and/or the precipitate, comprised in the aluminum source compound supplied to step (a) can be appropriately determined.

The method for producing a fluorine-containing polyaluminum chloride of the present embodiment can further comprise adjusting the basicity of the fluorine-containing polyaluminum chloride.

The basicity adjustment is not limited provided that it is the method which can adjust the basicity, and it is preferably carried out by adding, for example, calcium hydroxide, sodium hydroxide, potassium hydroxide, calcium aluminate, or sodium aluminate, to the mixture comprising a fluorine-containing polyaluminum chloride, and it is more preferably carried out by adding calcium hydroxide.

The basicity can be adjusted so as to be the desired basicity. For example, when calcium hydroxide is used for adjusting the basicity, calcium hydroxide may be added so as to be 20 parts by mass or less or 15 parts by mass or less, per 100 parts by mass of the solution comprising a fluorine-containing polyaluminum chloride. The lower limit of calcium hydroxide is not limited, and may be, for example, 0 parts by mass per 100 parts by mass of the above solution.

In one embodiment, the basicity is adjusted for the reaction mixture obtained in (a) above.

In one embodiment, the basicity is adjusted for the mixture obtained by filtration after (a) above.

The basicity adjustment can be carried out at, for example, 70 to 200°C or 70 to 99°C.

The time for basicity adjustment may be, for example, 0.5 to 8 hours or 0.5 to 5 hours.

In one embodiment, filtration and/or sedimentation may be carried out after the basicity adjustment. By carrying out such a treatment, the solid component comprised in the liquid to be treated can be removed, and the clarity of the liquid to be treated can be improved.

The method for producing a fluorine-containing polyaluminum chloride of the present embodiment can further comprise drying the reaction mixture obtained in (a) above or the mixture after adjusting the basicity. By drying them, the concentration of a fluorine-containing polyaluminum chloride in the mixture comprising a fluorine-containing polyaluminum chloride can be adjusted, or the mixture comprising a powdery fluorine-containing polyaluminum chloride (for example, the chemical agent in powder form of the present disclosure) can be obtained.

The above drying can be carried out at a temperature that is usually carried out, for example, it may be carried out at 50 to 300°C, or at 70 to 200°C.

The above drying can be carried out by using a commonly available means, for example, a dryer, specifically, a spray dryer, a roll dryer, a thin film dryer, or a box dryer.

In the above drying, discharge gas comprising hydrogen chloride (water vapor comprising hydrogen chloride) can be produced. The discharge gas comprising hydrochloric acid can be reused after being recondensed and refined as necessary, as, for example, a raw material for an aqueous solution comprising hydrogen chloride and fluorine to be supplied to (a) above.

The discharge gas comprising hydrogen chloride that can be produced in the above drying can become an alkaline sodium chloride aqueous solution by, for example, alkaline neutralization in a gas absorption tower. The neutralized aqueous solution can be used as a basicity regulator. The neutralized aqueous solution can be reduced in volume by a method such as evaporation concentration or membrane separation, as necessary.

The production method of the present disclosure may be carried out at least partially or entirely in continuously or in a batch-type.

The fluorine-containing polyaluminum chloride produced by the above production method can be used for the chemical agent comprising the fluorine-containing polyaluminum chloride of the present disclosure. The fluorine-containing polyaluminum chloride may be used as a chemical agent as it is, or may be mixed with any other component, for example, a solvent, and used as a chemical agent.

The chemical agent of the present disclosure can be used as a coagulant, for example, a coagulant used for water treatment for water supply and general industrial water, or water treatment for urban sewage, civil engineering wastewater or factory wastewater. By using the chemical agent of the present disclosure, the suspended solids (SS component) comprised in the waters to be treated can be aggregated. The present disclosure is not bound by any theory, but it is conjectured because the fluorine-containing polyaluminum chloride acts on the suspended solids comprised in the liquid to be treated to form flocs, and then the flocs are precipitated. When the surface of the suspended solid is a substance that is negatively charged, the positively charged ions of the fluorine-containing polyaluminum chloride electrically neutralize the surfaces of the suspended solids, and the electrical repulsive force between the suspended solids is alleviated, and therefore the chemical agent of the present disclosure can act effectively.

Suspended solids (SS component) are generally insoluble substances suspended in the liquid to be treated. The suspended solids are substances that remain on the filter medium after, for example, having passed sample substances through a sieve having a sieve opening size of 2 mm, and further having subjected them to suction filtration by using a filter medium (for example, a filter medium having a pore size of 0.45 $\mu$m). The suspended solids are not limited, and include inorganic substances such as minerals, oxides (for example, $SiO_2$) and organic substances.

In one embodiment, the chemical agent of the present disclosure can be used with other coagulants. Although it is not limited that they can be used together, for example, the chemical agent of the present disclosure and another coagulant may be used at the same time, or the chemical agent of the present disclosure and another coagulant may be separately used at a different time. When separately used at a different time, either the chemical agent of the present disclosure and another coagulant may be added first, but for example, the chemical agent of the present disclosure may be added first, and then another coagulant may be added.

In the above embodiment, another coagulant includes coagulants other than the fluorine-containing polyaluminum chloride, and for example, it includes polymer coagulants and inorganic coagulants other than the fluorine-containing polyaluminum chloride. The polymer coagulant is a coagulant having a large molecular weight, and the polymer coagulant is not limited, and includes, for example, polyacrylamide. The inorganic coagulant includes aluminum sulfate, aluminum chloride, polyaluminum ferric chloride (PAFC), ferric chloride, polyferric sulfate, and ferric sulfate.

For example, after adding the chemical agent of the present disclosure, the polymer coagulant may be added as another coagulant.

When the chemical agent of the present disclosure is used as the coagulant and is a chemical agent in the form of a liquid material, the aluminum concentration being in the range of 5 to 20 parts by mass per 100 parts by mass of the chemical agent comprising a fluorine-containing polyaluminum chloride and the basicity in the fluorine-containing polyaluminum chloride being in the range of 30 to 95%, are preferred, and the aluminum concentration in the range of 5 to 15 parts by mass and the basicity in the range of 40 to 85% are more preferred. The aluminum concentration is converted in terms of $Al_2O_3$. The cohesive force of the present chemical agent can be more favorably enhanced while having such an aluminum concentration and basicity.

When the chemical agent of the present disclosure is used as the coagulant and is a chemical agent in powder form, the aluminum concentration being in the range of 20 to 40 parts by mass per 100 parts by mass of the chemical agent comprising a fluorine-containing polyaluminum chloride and the basicity in the fluorine-containing polyaluminum chloride being in the range of 30 to 95%, are preferred, and the aluminum concentration in the range of 25 to 40 parts by mass as well as the basicity in the range of 40 to 85% is more preferred. The aluminum concentration is converted in terms of $Al_2O_3$. The cohesive force of the present chemical agent can be more favorably enhanced while having such an aluminum concentration and basicity.

In one embodiment, the chemical agent of the present disclosure can be used to remove ions comprised in a solution, for example, an ion comprising phosphorus (specifically, an elemental phosphorus) (specifically, $PO_4^{3-}$, $HPO_4^{2-}$, or $H_2PO_4^-$, more specifically $PO_4^{3-}$) or a calcium ion. It is conjectured because fluorine comprised in the chemical agent of the present disclosure (specifically, the fluorine comprised in the fluorine-containing polyaluminum chloride) bonds with the above ions to enable to form a precipitate. When the chemical agent of the present disclosure comprises a predetermined concentration of fluorine, the chemical agent can efficiently remove phosphorus-containing components.

In one embodiment, the chemical agent of the present disclosure can be used to remove an ion comprising phosphorus (specifically, elemental phosphorus) and a calcium ion, in particular a phosphate ion and a calcium ion. This is conjectured because fluorine comprised in the chemical agent of the present disclosure (specifically, the fluorine comprised in the fluorine-containing polyaluminum chloride) bonds with the above ions to enable to form, for example, fluorinated apatite ($Ca_{10}(PO_4)_6F_2$) that is a low solubility salt.

By carrying out the treatment with the chemical agent of the present disclosure in one embodiment, the phosphate ion comprised in the treated solution can be 100 ppm by mass or less, 10 ppm by mass or less, or 1 ppm by mass or less.

In one embodiment, by the treatment with the chemical agent of the present disclosure, the proportion of the phosphate ion comprised in the treated solution to the phosphate ion comprised in the solution before the treatment can be, for example, 50% or less, 20% or less, 5% or less, or 3.5% or less. The proportion of phosphate ions comprised in the treated solution to the phosphate ions comprised in the solution before treatment can be in the range of, for example, 50 to 0%.

The chemical agent of the present disclosure can also be used as, for example, a tanning agent, a papermaking sizing agent (anti-bleeding agent), pharmaceutical or cosmetic raw materials (for example, antiperspirant), a dyeing aid, or ceramic binders.

Although the embodiments have been described above, it will be understood that various changes in the forms and details are possible without deviating from the gist and scope of the claims.

Examples

The present disclosure will be more specifically described by way of the following examples, and the present disclosure is not limited to these Examples.

The aluminum concentration, basicity, and fluorine concentration were measured as follows.

- Aluminum concentration in fluorine-containing polyaluminum chloride

It was measured according to the method described in GB/T-22627.

- Basicity of fluorine-containing polyaluminum chloride

It was measured according to the method described in GB/T-22627.

- Fluorine concentration in chemical agent

The concentration of fluorine comprised in the chemical agent was measured based on the following method.

(1) 9 ml of 35% hydrochloric acid and 0.5 ml of TMCS were mixed with 1 ml of the chemical agent, and the mixture was shaken and stirred for 1 minute.
(2) 2 ml of a toluene solution in which the internal standard substance, n-pentane, was added, was charged to the mixture obtained in (1) above, and the mixture was shaken and stirred for 1 minute.
(3) The mixture obtained in (2) above was allowed to stand for 3 minutes. Then, 2 ml of a supernatant was collected. The collected supernatant was analyzed by using gas chromatography under the following conditions. The fluorine concentration was determined based on the area ratio of the peak of the internal standard substance, n-pentane, and the peak of TMFS.

According to the above method, it is conjectured that the bond between the fluorine bonded to the molecular chain and the molecular chain is decomposed by 35% hydrochloric acid, from which the fluorine measured in (3) above is both fluorine having been present as a fluorine ion in the chemical agent and fluorine having bonded to the molecular chain.

(Gas chromatography analysis conditions)

Apparatus used: Gas chromatograph GC-2014 (manufactured by Shimadzu Corporation)
Column: Silicone OV-1 column
Column temperature: Holding at 50°C for 5 minutes → Heating up to 150°C at a temperature-increasing rate of 40°C/min → Holding at 150°C for 15 minutes
Detection method: FID (Flame Ionization Detector)
Carrier gas: $N_2$, Flow rate: 50 mL/min
Injection port temperature: 100°C
Detector temperature: 180°C

- Fluorine ion concentration in chemical agent

The fluorine ion concentration in the chemical agent was measured in the similar manner as in the aforementioned method for measuring "fluorine concentration in a chemical agent" except that pure water was used instead of 35% hydrochloric acid in (1) of the aforementioned method for measuring "fluorine concentration in a chemical agent".
In this method, the decomposition operation by using 35% hydrochloric acid is not carried out. Therefore, the measured fluorine is considered to have been present in an ionic state in the chemical agent.

- Concentration of fluorine bonded to molecular chain of fluorine-containing polyaluminum chloride

The difference (delta value) between the value detected as the aforementioned "fluorine concentration in the chemical agent" and the "fluorine ion concentration in the chemical agent" was considered to be the concentration of fluorine bonded to the molecular chain of the fluorine-containing polyaluminum chloride.

- Concentrations of hydrogen chloride and fluorine ion in aqueous solution

The concentrations of hydrogen chloride and fluorine ions in the aqueous solution supplied in the Examples were measured as follows.
The concentration of hydrogen chloride was measured by neutralization titration using a sodium hydroxide aqueous solution. Subsequently, the aqueous solution after neutralization was analyzed by using the following fluorine ion meter, and the fluorine ion concentration was measured.
Apparatus used: Ion meter F73 and fluoride ion selective electrode (manufactured by HORIBA, Ltd.)

(Example 1)

The present example relates to an embodiment in which (a) above is carried out in a two-stage reaction.
100 parts by mass of an aqueous solution comprising 18 parts by mass of hydrogen chloride and 2,000 ppm by mass of fluorine ions was added to a reaction vessel, and 21 parts by mass of aluminum hydroxide was added per 100 parts by mass of the aqueous solution. After reacting the mixture at 95°C and normal pressure (0 MPaG) for 4 hours, the reaction was carried out at 150°C and 0.35 MPaG for 6 hours.
The obtained reaction solution was filtered to remove unreacted aluminum hydroxide. 10 parts by mass of calcium hydroxide was added to the filtrate per 100 parts by mass of the aqueous solution. This mixture was reacted at 90°C for 1 hour, and the basicity was adjusted to obtain a chemical agent in the form of a liquid material comprising a fluorine-containing polyaluminum chloride. The content of aluminum (in terms of $Al_2O_3$) was 10.2 parts by mass per 100 parts by mass of the chemical agent and the basicity was 63%.
The fluorine concentration in the chemical agent in the form of a liquid material was 1,538 ppm by mass, which was 28,000 ppm by mass when converted to the concentration per part by mass of aluminum. The fluorine ion concentration in the obtained chemical agent was 15.7 ppm by mass, which was 300 ppm by mass in terms of the concentration per part by mass of aluminum.
The chemical agent in the form of a liquid material was dried at 250°C for 60 minutes by using a spray dryer to obtain a chemical agent in powder form comprising a fluorine-containing polyaluminum chloride. The content of aluminum (in terms of $Al_2O_3$) was 25 parts by mass per 100 parts by mass in the chemical agent and the basicity was 63%.

(Example 2)

The present example relates to an embodiment in which (a) above is carried out in a one-stage reaction.
100 parts by mass of an aqueous solution comprising 18 parts by mass of hydrogen chloride and 2,000 ppm by mass of fluorine ions was added to a reaction vessel, and 21 parts by mass of aluminum hydroxide was added per 100 parts by mass of the aqueous solution. Then, the reaction was carried out at 160°C and 0.52 MPaG for 8 hours.
The obtained reaction solution was filtered to remove unreacted aluminum hydroxide. 11 parts by mass of calcium hydroxide per 100 parts by mass of the aqueous solution was added to the filtrate. This mixture was reacted at 90°C for 1 hour and the basicity was adjusted to obtain a chemical agent in the form of a liquid material comprising a fluorine-containing polyaluminum chloride.
In the chemical agent in the form of a liquid material, the aluminum concentration (in terms of $Al_2O_3$) was 10.9 parts by mass, the basicity was 79%, the fluorine concentration per part by mass of aluminum was 1,555 ppm by mass, which was 27,000 ppm by mass when converted to the concentration per part by mass of aluminum. The fluorine ion concentration in the obtained chemical agent was 1 ppm by mass or less (detection limit or less), which was 20 ppm by mass or less when converted to the concentration per part by mass of aluminum.

(Comparative Example 1)

A chemical agent comprising a fluorine-containing polyaluminum chloride in the form of a liquid material (manufactured by JIANGYIN CHANGJIANG CHEMICAL CO., LTD.) was used as a control chemical agent. The aluminum concentration (in terms of $Al_2O_3$) per 100 parts by mass of the chemical agent was 10 parts by mass, and the basicity was 80%. In the above chemical agent, the fluorine concentration per part by mass of aluminum was 4,300 ppm by mass. The fluorine ion concentration in the chemical agent was 1 ppm by mass or less (detection limit or less), which was 20 ppm by mass or less when converted to the concentration per part by mass of aluminum.

(Comparative Example 2)

A chemical agent comprising a fluorine-containing polyaluminum chloride in the form of a liquid material (manufactured by SUZHOU YO TECH FINE CHEMICAL CO., LTD.) was used as a control chemical agent. The aluminum concentration (in terms of $Al_2O_3$) per 100 parts by mass of the chemical agent was 10 parts by mass, and the basicity was 40 to 90%. In the above chemical agent, the fluorine concentration per part by mass of aluminum was 290 ppm by mass. The fluorine ion concentration in the chemical agent was 1 ppm by mass or less (detection limit or less), which was 20 ppm by mass or less when converted to the concentration per part by mass of aluminum.
Using the chemical agent in the form of the liquid material obtained in Example 1 and the chemical agents of Comparative Examples 1 and 2, the removal examination of the suspended solids and removal examinations of phosphate ions (removal examination 1 and removal examination 2) were carried out as follows.

- Removal examination of suspended solids

As liquids to be treated, each of 1,000 ml of the "dyeing factory wastewater" comprising 476 mg/L of the suspended solids (SS component, hereinafter may be referred to as "SS") and the "chemical factory wastewater" comprising 432 mg/L of the suspended solids, was prepared.
0.1 g of the chemical agent in the form of the liquid material obtained in Example 1 was added to the above wastewaters, respectively. Subsequently, the pH of each solution was adjusted to the range of 7 to 7.5 by using a 1N NaOH aqueous solution. The adjusted liquid was rapidly stirred at room temperature for 2 minutes at a rate of 300 rpm using a stirrer. Then, the mixture was stirred at 150 rpm for 10 minutes and then allowed to stand for 10 minutes. After the standing, 300 ml of a supernatant was sampled, and the SS concentration was measured. The method for measuring the SS concentration is as shown below.

- Method for measuring SS concentration

(1) A filter having a pore size of 0.45 μm, which was weighed, was set in a suction filter;
(2) 300 ml of a sampled supernatant was poured in the filter, the vacuum valve was opened to start suction filtration;

(3) when water was exhausted on the filter having a pore size of 0.45 μm, suction filtration under reduced pressure was stopped, and then, the filter was removed with tweezers and collected in a petri dish;
(4) the recovered filter was dried for 10 hours with a dryer at 60°C; and
(5) after cooling to room temperature, the weight of the filter was measured, and by using the obtained values, the SS concentration was determined according to the following formula:

$$\text{(weight of filter after drying - weight of filter before use) [g] /amount filtered [ml]} \times 1,000,000$$

$$\text{SS removal ratio [\%] =}$$
$$(1 - \text{(SS concentration after treatment [mg/L]/SS concentration before treatment [mg/L])}) \times 100.$$

The results are shown in Table 1.

[Table 1]

|  |  | SS concentration before treatment [mg/L] | SS concentration after treatment [mg/L] | SS removal ratio [%] |
|---|---|---|---|---|
| Example 1 | Dyeing factory wastewater | 476 | 7.2 | 98.5 |
|  | Chemical factory wastewater | 432 | 9.2 | 97.9 |

As described above, the chemical agent of Example 1 was found to be effective in removing the suspended solids (SS component) in wastewater.

- Removal Examination 1 of phosphate ion ($PO_4^{3-}$)

100 ml of an aqueous solution comprising 0.82 g of $NaH_2PO_4$ and 0.97 g of $CaCl_2$ was prepared ($PO_4^{3-}$ was 500 ppm by mass and $Ca^{2+}$ was 350 ppm, comprised in the aqueous solution).

(Removal examination of phosphate ion by using chemical agent of Example 1)

0.1 g of the chemical agent in the form of the liquid material obtained in Example 1 was added to the above aqueous solution comprising $NaH_2PO_4$ and $CaCl_2$. Then, the pH of the solution was adjusted to the range of 7 to 7.5 by using a 1N NaOH aqueous solution. A stirrer was used to rapidly stir the mixture at a rate of 300 rpm at room temperature for 1 minute. Subsequently, while maintaining stirring, 1 ppm by mass of polyacrylamide (PAM, Orflock ON-1 manufactured by Organo Corporation) that was a polymer coagulant was added per 100 parts by mass of the solution, and the mixture was stirred at 300 rpm for 1 minute. After this, the mixture was stirred at 150 rpm for 10 minutes and then allowed to stand for 10 minutes. After the standing, 30 ml of a supernatant was sampled, and the concentration of phosphate ions was measured by ion chromatography. The method for measuring the concentration of phosphate ions is as shown below. The results are shown in Table 2.

(Removal examination of phosphate ion by using chemical agents of Comparative Example 1 or 2)

The removal of phosphate ions in these Comparative Examples each was examined in the similar manner as in the above except that the chemical agent of the Comparative Example was used instead of the chemical agent in the form of the liquid material obtained in Example 1.

(Method for measuring phosphate ion concentration)

Measurement was carried out by using ion chromatography (product number: ICS-2100, manufactured by Thermo Fisher Scientific, Inc.).

- Removal examination 2 of phosphate ion ($PO_4^{3-}$)

The same procedure as in the above removal examination 1 was carried out except that 100 ml of an aqueous solution comprising 0.082 g of $NaH_2PO_4$ and 0.097 g of $CaCl_2$ ($PO_4^{3-}$ was 50 ppm by mass and $Ca^{2+}$ was 35 ppm, comprised in the aqueous solution) was used. The results are shown in Table 3.

In Tables 2 and 3 below, the "initial solution" refers to the solution comprising the phosphate ion before adding the chemical agent obtained in the Example or Comparative Example, and the "post-treatment solution" refers to the solution after adding the chemical agent obtained in the Example or the control chemical agent of the Comparative Example and carrying out a treatment for removing phosphate ions.

[Table 2]

| | Chemical agent (100 parts by mass) | | | | Initial solution | Post-treatment solution |
|---|---|---|---|---|---|---|
| | Fluorine concentration per part by mass of aluminum (ppm by mass) | Fluorine ion concentration per part by mass of aluminum (ppm by mass) | Aluminum concentration (part by mass) (in terms of $Al_2O_3$) | Basicity (%) | $PO_4^{3-}$ (ppm by mass) | $PO_4^{3-}$ (ppm by mass) |
| Example 1 | 28,000 | 300 | 10.2 | 63 | 486 | 51 |
| Comparative Example 1 | 4,300 | 20 or less | 10 | 80 | 486 | 74 |
| Comparative Example 2 | 290 | 20 or less | 10 | 40~90 | 486 | 134 |

[Table 3]

| Chemical agent | Initial solution | | Post-treatment solution |
|---|---|---|---|
| | Amount of solution (g) | $PO_4^{3-}$(ppm by mass) | $PO_4^{3-}$(ppm by mass) |
| Example 1 | 100 | 49 | 0.58 |
| Comparative Example 1 | 100 | 49 | 3.8 |
| Comparative Example 2 | 100 | 49 | 1.9 |

Industrial Applicability

The chemical agent of the present disclosure can be used as a coagulant used for water treatment for water supply or general industrial water, or for water treatment for urban sewage, civil engineering wastewater or factory wastewater.

**Claims**

1.  A chemical agent comprising a fluorine-containing polyaluminum chloride, wherein
    the chemical agent has 4,500 to 100,000 ppm by mass of fluorine per part by mass of aluminum.

**2.** The chemical agent according to claim 1, which is in powder form.

**3.** The chemical agent according to claim 1 or 2, further comprising a solvent.

**4.** The chemical agent according to claim 3, wherein the solvent comprises water.

**5.** The chemical agent according to claim 3 or 4, which is in a form of a liquid material.

**6.** The chemical agent according to any one of claims 1 to 5, which is a coagulant.

**7.** A method for producing a fluorine-containing polyaluminum chloride, comprising

(a) reacting 100 parts by mass of an aqueous solution comprising 10 to 36 parts by mass of hydrogen chloride and 300 to 5,000 ppm by mass of fluorine, and an aluminum source compound to obtain a reaction mixture comprising the fluorine-containing polyaluminum chloride.

**8.** The method for producing a fluorine-containing polyaluminum chloride according to claim 7, wherein (a) comprises reacting the aqueous solution comprising hydrogen chloride and fluorine, and the aluminum source compound at a pressure of 0 to 1.45 MPaG and a temperature of 100 to 200°C to obtain the reaction mixture comprising the fluorine-containing polyaluminum chloride.

**9.** The method for producing a fluorine-containing polyaluminum chloride according to claim 7 or 8, wherein (a) comprises reacting the aqueous solution comprising hydrogen chloride and fluorine and the aluminum source compound at a temperature of 70 to 99°C and then at a pressure of 0 to 1.45 MPaG and a temperature of 100 to 200°C to obtain the reaction mixture comprising the fluorine-containing polyaluminum chloride.

**10.** The method for producing a fluorine-containing polyaluminum chloride according to any one of claims 7 to 9, wherein, in (a), 100 parts by mass of the aqueous solution is reacted with the aluminum source compound comprising 5 to 35 parts by mass of aluminum in terms of aluminum oxide.

**11.** The method for producing a fluorine-containing polyaluminum chloride according to any one of claims 7 to 10, wherein the aluminum source compound is aluminum hydroxide.

**12.** The method for producing a fluorine-containing polyaluminum chloride according to claim 11, wherein the aluminum hydroxide sifts through a 50-mesh sieve and does not sift through a 1,250-mesh sieve.

**13.** The method for producing a fluorine-containing polyaluminum chloride according to any one of claims 7 to 12, further comprising drying the reaction mixture obtained in (a).

**14.** The method for producing a fluorine-containing polyaluminum chloride according to any one of claims 7 to 13, further comprising adjusting basicity of the fluorine-containing polyaluminum chloride.

## INTERNATIONAL SEARCH REPORT

| International application No. |
|---|
| PCT/JP2019/049928 |

**A. CLASSIFICATION OF SUBJECT MATTER**
B01D 21/01(2006.01)i; C01F 7/52(2006.01)i
FI: B01D21/01 102; C01F7/52

According to International Patent Classification (IPC) or to both national classification and IPC

**B. FIELDS SEARCHED**

Minimum documentation searched (classification system followed by classification symbols)
B01D21/01; C01F7/52

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | EP 0272477 A1 (AREZIA SRL) 29.06.1988 (1988-06-29) claims, examples 1, 5 | 1-5,7-14 |
| X | JP 7-53276 B2 (KURITA WATER INDUSTRIES LTD.) 07.06.1995 (1995-06-07) column 4, line 30 to column 8, line 32, fig. 1 | 1-6 |
| A | KR 10-1010733 B1 (UNITECH CO., LTD.) 24.01.2011 (2011-01-24) paragraphs [0011]-[0058], fig. 1 | 1-14 |
| A | CN 106745139 A (INST PROCESS ENG CAS) 31.05.2017 (2017-05-31) paragraphs [0018]-[0032], fig. 1 | 1-14 |
| A | CN 104649391 A (UNIV SOUTH CHINA TECH) 27.05.2015 (2015-05-27) paragraphs [0017]-[0030] | 1-14 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 March 2020 (05.03.2020) | 17 March 2020 (17.03.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

Information on patent family members

International application No.

PCT/JP2019/049928

| Patent Documents referred in the Report | Publication Date | Patent Family | Publication Date |
|---|---|---|---|
| EP 0272477 A1 | 29 Jun. 1988 | IT 1199673 B claims, examples 1, 5 | |
| JP 7-53276 B2 | 06 Jun. 1995 | US 5043072 A column 2, line 24 to column 8, line 22, fig. 1 EP 421399 A1 DE 69001344 T3 | |
| KR 10-1010733 B1 | 24 Jan. 2011 | (Family: none) | |
| CN 106745139 A | 31 May 2017 | (Family: none) | |
| CN 104649391 A | 27 May 2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106745139

- CN 104649391